# DEMANDE DE BREVET EUROPEEN

(11) **EP 3 363 711 A1**
(43) Date de publication de la demande: **22.08.2018**
(21) Numéro de dépôt: 18154392.7
(22) Date de dépôt: 31.01.2018
(51) Int. Cl.: B62B 5/08, B62B 9/28, B62B 7/12, B62B 9/10

(54) **POUSSETTE POUR ENFANT COMPRENANT UN SIÈGE D'APPOINT AMOVIBLE, ET SIÈGE D'APPOINT CORRESPONDANT**

(30) Priorité: 14.02.2017 FR 1751201; 09.06.2017 FR 1755199
(71) Demandeur: Dorel France, 49309 Cholet Cedex (FR)
(72) Inventeur: NASLAIN, Yann, 49300 CHOLET (FR)
(74) Mandataire: Vidon Brevets & Stratégie

(57) **Abrégé**

L'invention se rapporte à une poussette pour enfant comprenant un châssis comportant deux montants avant (11, 12), portant chacun une roue avant (13, 14) ou un bloc de roues avant, deux montants arrière (21, 22), portant chacun une roue arrière (23, 24) ou un bloc de roues arrière, et deux poussoirs (31, 32) portant en leur partie supérieure des poignées et/ou un guidon, ledit châssis pouvant recevoir un support d'enfant principal.

Selon l'invention, ledit châssis présente une première traverse (34) s'étendant entre lesdits poussoirs (31, 32), au voisinage des parties inférieures desdits poussoirs (31, 32), et ladite poussette comprend un siège d'appoint (4, 6) amovible présentant une assise (42, 62) et un dossier (41, 61) et équipé de premiers moyens de solidarisation s'étendant à proximité d'une zone reliant ladite assise et ledit dossier et coopérant avec ladite première traverse (34).

## Description

### 1. Domaine de l'invention

Le domaine de l'invention est celui de la puériculture, et en particulier des poussettes pour enfant(s), ou « voitures d'enfant(s) » (ces termes pouvant englober tous les dispositifs de puériculture munis de roues et aptes à transporter un ou plusieurs enfants).

Plus précisément, l'invention concerne les poussettes d'enfants pouvant être équipées de deux sièges, de façon à transporter simultanément deux enfants.

L'invention concerne en particulier la mise en oeuvre d'un second siège optionnel, ou siège d'appoint, sur une poussette équipée d'un siège principal.

### 2. Art antérieur

Des poussettes, spécialement prévues pour le transport de plusieurs enfants à la fois, ont été développées pour répondre à la demande des familles nombreuses ou des personnes s'occupant de plusieurs enfants. Par exemple, il existe des poussettes doubles qui comportent deux sièges semblables, montés l'un à côté de l'autre ou l'un derrière l'autre, de manière échelonnée en hauteur ou non. Les poussettes doubles permettent ainsi à une personne seule de transporter deux enfants simultanément.

Toutefois, ces poussettes doubles sont généralement encombrantes, plus lourdes que les poussettes simples (à un seul siège) et par conséquent difficilement manoeuvrables. De plus, lorsqu'un seul enfant doit être transporté, la poussette double n'est utilisée qu'à moitié.

Les parents peuvent éventuellement disposer d'une autre poussette, simple, qui remplace la poussette double dans cette situation. Mais, ceci implique d'acheter plusieurs poussettes, ce qui est peu économique, et d'avoir la place de stocker les différents modèles.

Par ailleurs, les besoins peuvent évoluer dans le temps : les parents ont d'abord un premier enfant, et une poussette simple suffit. Lorsqu'arrive un second enfant, une poussette double est utile pendant un certain temps. Puis, le retour à la poussette simple arrive, lorsque le premier enfant marche suffisamment.

Ainsi, il a été développé des poussettes simples sur lesquelles un siège d'appoint peut être monté, en cas de besoin. Ce siège d'appoint est souvent fixé à l'avant ou à l'arrière du siège principal de la poussette, à l'aide de moyens spécifiques.

Certaines solutions prévoient l'ajout de pièces intermédiaires de connexion, ou adaptateurs, sur le châssis de la poussette, destinées à coopérer avec des éléments du siège d'appoint pour permettre sa mise en position. Cette solution n'est cependant pas idéale puisqu'en cas de perte ou d'oubli d'un ou plusieurs adaptateurs, le siège d'appoint ne peut pas être monté.

Selon une variante, il a donc été envisagé que le siège d'appoint puisse être monté sans utiliser de pièces intermédiaires, ou adaptateurs. Le document de brevet CN2381555Y présente par exemple une poussette simple sur laquelle un siège d'appoint amovible peut être installé à l'avant de la poussette. Ce siège se fixe aux montants avant de la poussette, qui comprennent des premiers éléments de solidarisation en saillie (tige, pion) destinés à coopérer avec des seconds éléments de solidarisation présents sur le siège d'appoint.

Toutefois, lorsque le siège d'appoint n'est pas utilisé, les éléments en saillie (tige, pion) du châssis de la poussette sont visibles et nuisent à son esthétique. Par ailleurs, ces éléments saillants peuvent s'avérer dangereux et entraîner des blessures. Ils sont par ailleurs complètement inutiles lorsque le siège d'appoint n'est pas utilisé.

Le châssis de la poussette est également, par conséquent, plus coûteux et complexe à fabriquer, ce qui se répercute sur le prix d'achat de la poussette, y compris lorsque l'achat d'un siège d'appoint n'est pas envisagé.

Ainsi, il existe un besoin d'un système simple et efficace, esthétique, peu coûteux et réduisant les risques de blessure, pour les sièges d'appoint de poussette.

### 3. Résumé

La présente invention a pour objectif de pallier ces inconvénients de l'art antérieur.

Ces objectifs, ainsi que d'autres qui apparaîtront par la suite, sont atteints à l'aide d'une poussette pour enfant comprenant un châssis comportant deux montants avant, portant chacun une roue avant ou un bloc de roues avant, deux montants arrière, portant chacun une roue arrière ou un bloc de roues arrière, et deux poussoirs portant en leur partie supérieure des poignées et/ou un guidon, ledit châssis pouvant recevoir un support d'enfant principal.

Selon l'invention, ledit châssis présente une première traverse s'étendant entre lesdits poussoirs, au voisinage des parties inférieures desdits poussoirs, et ladite poussette comprend un siège d'appoint amovible, présentant une assise et un dossier et équipé de premiers moyens de solidarisation s'étendant à proximité d'une zone reliant ladite assise et ledit dossier et coopérant avec ladite première traverse.

Cette première traverse permet une installation rapide, simple et efficace d'un siège d'appoint.

La solidarisation se fait aisément, via notamment les premiers moyens de solidarisation placés à proximité de la zone reliant le dossier et l'assise, c'est-à-dire sur un axe reliant le dossier et l'assise, sur la partie inférieure du dossier, dans le prolongement de l'assise et/ou légèrement sous celle-ci.

Il est ainsi possible de monter le siège d'appoint en aval, ou en avant, d'un support d'enfant principal, et au moins dans certains cas plus bas que celui-ci.

Selon un mode de réalisation particulier, ledit siège d'appoint amovible comprend des seconds moyens de solidarisation avec une portion inférieure dudit châssis, placée plus bas que ladite première traverse.

L'invention permet ainsi de monter de manière simple un siège d'appoint sur un châssis de poussette, en utilisant directement les éléments existants du châssis, à savoir la première traverse et une portion inférieure du châssis, c'est-à-dire sans qu'il soit nécessaire de rajouter des éléments intermédiaires de connexion entre le châssis et le siège d'appoint, ni d'équiper le châssis d'éléments spécifiques dédiés à recevoir le siège d'appoint.

Lorsque le siège d'appoint est retiré du châssis de la poussette, celle-ci peut ainsi être utilisée sans risques de blessure pour l'enfant ou l'adulte, du fait de l'absence de tels éléments qui pourraient faire saillie.

Selon un mode de réalisation particulier, lesdits seconds moyens de solidarisation définissent deux points d'appui dudit siège d'appoint sur ledit châssis.

Ces deux points d'appui permettent d'assurer la stabilité du siège d'appoint au niveau de la partie inférieure du châssis.

Selon une mise en oeuvre particulière, ledit châssis présente une seconde traverse reliant lesdits montants avant au voisinage desdites roues avant, et lesdits seconds moyens de solidarisation coopèrent avec cette seconde traverse.

L'utilisation de cette seconde traverse permet d'offrir une base efficace pour que le siège d'appoint y prenne appui.

Selon un mode de réalisation particulier, lesdits premiers et/ou seconds moyens de solidarisation comprennent au moins un élément de solidarisation venant chevaucher au moins une desdites première et/ou seconde traverses.

Ainsi, le bon positionnement et la stabilité du siège d'appoint sont assurés, les éléments de solidarisation étant au moins partiellement immobilisés autour de la/des traverse(s).

Selon un mode de réalisation particulier, lesdits seconds moyens de solidarisation comprennent au moins un élément de solidarisation monté dans le prolongement d'au moins une jambe sensiblement verticale s'étendant depuis l'assise dudit siège d'appoint.

Selon un mode de réalisation particulier, lesdits seconds moyens de solidarisation comprennent deux éléments de solidarisation montés respectivement dans le prolongement de deux jambes, venant respectivement prendre appui au voisinage des deux extrémités de ladite seconde traverse.

La solidarisation au niveau des deux extrémités de la traverse offre deux points d'appui relativement éloignés l'un de l'autre et garantit ainsi une bonne stabilité du siège d'appoint.

Selon un mode de réalisation spécifique, le ou lesdits éléments de solidarisation permettent une rotation dudit siège d'appoint par rapport à ladite seconde traverse, sur une plage angulaire prédéterminée.

Une telle rotation permet notamment de faciliter la mise en place du siège d'appoint lors de son installation sur la poussette.

Plus particulièrement, celui-ci peut être dans un premier temps solidarisé à la seconde traverse grâce aux seconds moyens de solidarisation, puis pivoté autour de cette seconde traverse de manière à ce que les premiers moyens de solidarisation viennent coopérer avec la première traverse, pour immobiliser le siège en position.

Selon un mode de réalisation particulier, chacun desdits éléments de solidarisation forme un collier présentant deux branches souples, pouvant s'écarter pour être mise en place sur ladite seconde traverse.

C'est une solution simple et efficace, qui garantit une immobilisation du siège par rapport à la seconde traverse, au moins dans une direction perpendiculaire à la longueur de la traverse.

Selon un autre mode de réalisation, lesdits points d'appui sont placés sur chacun desdits montants avant, lesdits seconds moyens de solidarisation comprenant une paire d'éléments de solidarisation venant chevaucher lesdits montants avant dudit châssis.

Cette solution est une alternative à l'utilisation d'une seconde traverse, permettant un bon positionnement et la stabilité du siège d'appoint, les éléments de solidarisation étant au moins partiellement immobilisés autour des montants.

Selon un mode de réalisation particulier, lesdits premiers moyens de solidarisation présentent au moins une mâchoire apte à enserrer ladite première traverse.

Selon un mode de réalisation particulier, ladite mâchoire s'étend à l'arrière du dossier dudit siège d'appoint, sensiblement dans le prolongement de son assise.

Selon un mode de réalisation particulier, ladite mâchoire s'étend sous le niveau de l'assise dudit siège d'appoint.

Selon un mode de réalisation spécifique, ladite mâchoire comprend une demi-mâchoire supérieure fixe et une demi-mâchoire inférieure mobile entre une position d'accrochage et une position de libération.

La demi-mâchoire inférieure peut ainsi être pivotée de façon à assurer une immobilisation du siège d'appoint sur le châssis. Dans une position immobilisée, la mâchoire est « fermée » autour de la traverse, c'est-à-dire qu'elle enserre la traverse.

Selon un mode de réalisation particulier, ladite demi-mâchoire inférieure comprend au moins une portion d'extrémité se déplaçant sous l'action d'une poignée montée sous ladite assise.

Cette portion d'extrémité assure notamment, de par son déplacement, le pivotement de la demi-mâchoire inférieure. L'action sur la poignée permet donc de « fermer ou « d'ouvrir » la mâchoire de façon à immobiliser ou libérer le siège d'appoint.

Selon un autre aspect, ladite poussette peut comprendre des moyens de verrouillage des premiers moyens de solidarisation avec ladite première traverse et/ou des seconds moyens de solidarisation avec ladite seconde traverse.

Selon encore un autre aspect, ladite poussette peut comprendre des moyens de verrouillage des premiers moyens de solidarisation avec ladite première traverse et/ou des seconds moyens de solidarisation avec au moins un desdits montants avant.

Ainsi, le siège d'appoint peut être verrouillé en position lors de son utilisation, de manière à éviter tout risque d'incidents dus à une mauvaise installation du siège.

L'utilisation de seconds moyens de solidarisation, en plus des premiers moyens de solidarisation, assure une immobilisation du siège selon trois points d'appui, ce qui garantit une bonne stabilité.

Selon un mode de réalisation particulier, ledit châssis porte une paire d'éléments de réception dudit support d'enfant principal, escamotables et/ou amovibles, permettant de décaler la position dudit support d'enfant principal vers l'arrière du châssis lorsque ledit siège amovible est installé sur le châssis.

Ces éléments de réception permettent ainsi de monter aisément un premier siège principal dont la position est décalée vers l'arrière de la poussette, tout en mettant en place un siège d'appoint à l'avant de la poussette.

Lorsqu'ils ne sont pas utilisés, ils peuvent être escamotés dans une position de rangement et/ou démontés, de façon à ce que le châssis de poussette ne présente pas de partie saillante, susceptible de blesser l'enfant ou l'adulte et/ou perturbant le pliage et/ou la compacité dans la position pliée.

Selon un mode de réalisation particulier, chacun des éléments de réception peut coopérer avec au moins deux emplacements de connexion distincts, correspondant à au moins deux positions distinctes dudit support d'enfant principal.

Ils permettent de choisir comment placer le siège d'enfant principal sur le châssis, en fonction de plusieurs critères tels que la présence ou non du siège d'appoint, le type de support utilisé et/ou la configuration du siège à l'installation (dos à la mère ou face à la mère).

Selon un mode de réalisation particulier, chacun desdits éléments de réception comporte des moyens de connexion à au moins un élément complémentaire, solidaire desdits montants avant.

Ainsi, les éléments de réception sont aisément mis en place (respectivement démontés) au niveau des montants avant via la coopération des moyens de connexion et des éléments complémentaires.

Selon un autre mode de réalisation, lesdits premiers moyens de solidarisation sont mobiles entre une position repliée et une position déployée.

Selon un autre mode de réalisation, ledit siège d'appoint comprend deux montants latéraux comprenant chacun une première portion solidarisée au siège et une seconde portion munie d'un desdits seconds moyens de solidarisation, ladite seconde portion étant articulée par rapport à ladite première portion.

Ainsi, il est facile pour l'utilisateur de faire passer le siège d'une position d'utilisation, dans laquelle les moyens de solidarisation sont déployés et solidarisés à la poussette, à une position de stockage, dans laquelle les moyens de solidarisation sont désolidarisés de la poussette et repliés.

Selon un autre mode de réalisation, lesdites secondes portions comprennent des moyens de contrôle de l'assise dudit siège.

Selon un autre mode de réalisation, lesdits moyens de contrôle de l'assise comprennent au moins une sangle reliée d'une part auxdites secondes portions et d'autre part à ladite assise.

Ainsi, le mouvement de l'assise est lié au mouvement des secondes portions comprenant les moyens de solidarisation. Cela est notamment utile lors du déploiement des secondes portions de façon à ce que l'assise se déploie en même temps que ces dernières. L'utilisateur n'a dont pas besoin de déployer manuellement l'assise.

Selon un autre aspect particulier, la poussette peut comprend une pédale d'aide au franchissement de trottoirs.

Cette pédale permet d'aider à lever l'avant de la poussette, en particulier lorsque deux enfants sont transportés.

Ladite pédale est montée de façon amovible sur ledit châssis, par exemple par clippage.

L'invention concerne également un siège d'appoint, destiné à être mis en oeuvre sur une poussette telle que décrite ci-dessus.

### 4. Liste des figures

D'autres caractéristiques et avantages de l'invention apparaîtront plus clairement à la lecture de la description suivante de différents modes de réalisation de l'invention, donnée à titre d'exemples illustratifs et non limitatifs, au regard des dessins annexés parmi lesquels :
- les **figures 1 à 3** concernent un premier mode de réalisation de l'invention :
- la **figure 1** illustre le siège d'appoint installé à l'avant du châssis de la poussette ;
- la **figure 2** représente le siège d'appoint en trois dimensions, vu de dessous, et plus spécifiquement ses moyens de solidarisation au châssis de poussette ;
- la **figure 3** est un schéma expliquant le processus de mise en place du siège d'appoint sur le châssis, et en particulier les traverses, de la poussette ;
- les **figures 4 à 10** concernent un second mode de réalisation de l'invention :

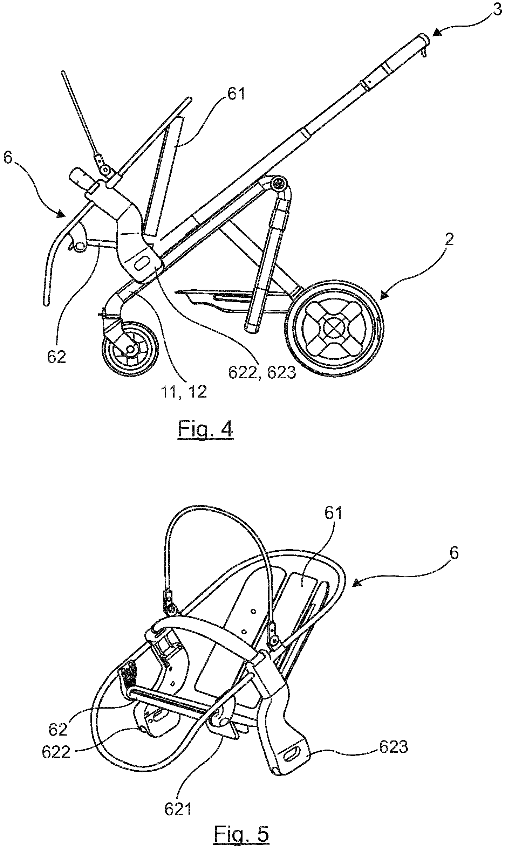

- la **figure 4** illustre le siège d'appoint installé à l'avant du châssis de la poussette ;
- la **figure 5** représente le siège d'appoint en trois dimensions, et plus spécifiquement ses moyens de solidarisation au châssis de poussette ;

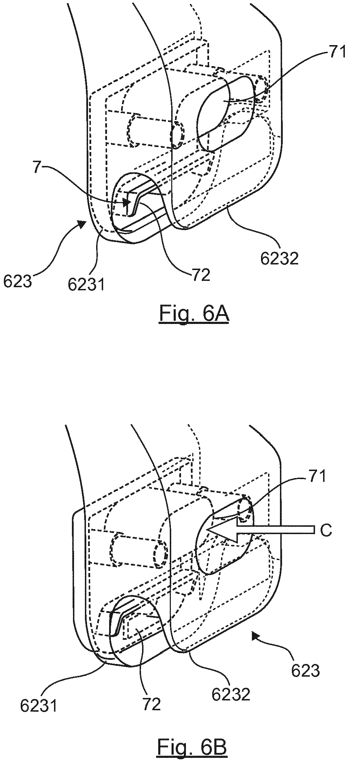

- les **figures 6A et 6B** illustrent plus particulièrement les moyens de solidarisation aux montants avant de la poussette, et représentent respectivement une position verrouillée des moyens de solidarisation et une position déverrouillée des moyens de solidarisation ;

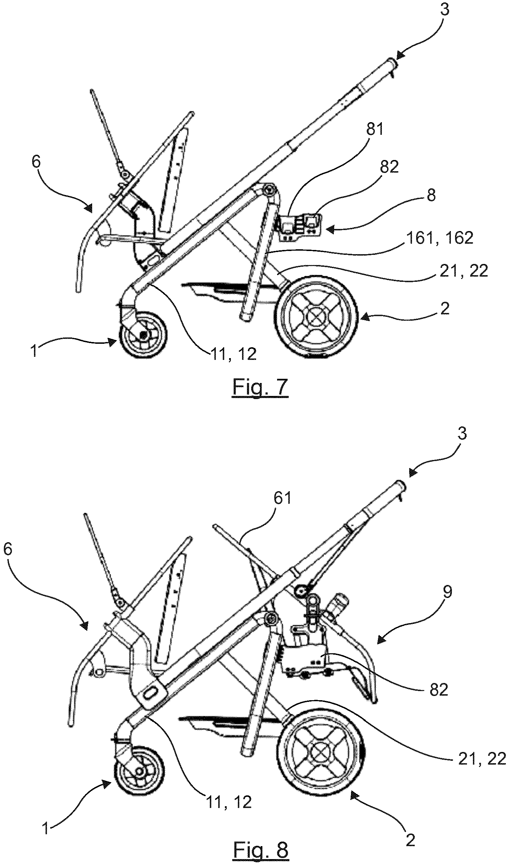

- la **figure 7** présente un châssis de poussette muni du siège d'appoint et d'une paire d'éléments arrière de fixation d'un second siège ;
- les **figures 8 à 10** représentent la poussette de la figure 7, munie d'un second siège arrière, respectivement en position face à la mère, allongé et dos à la mère ;

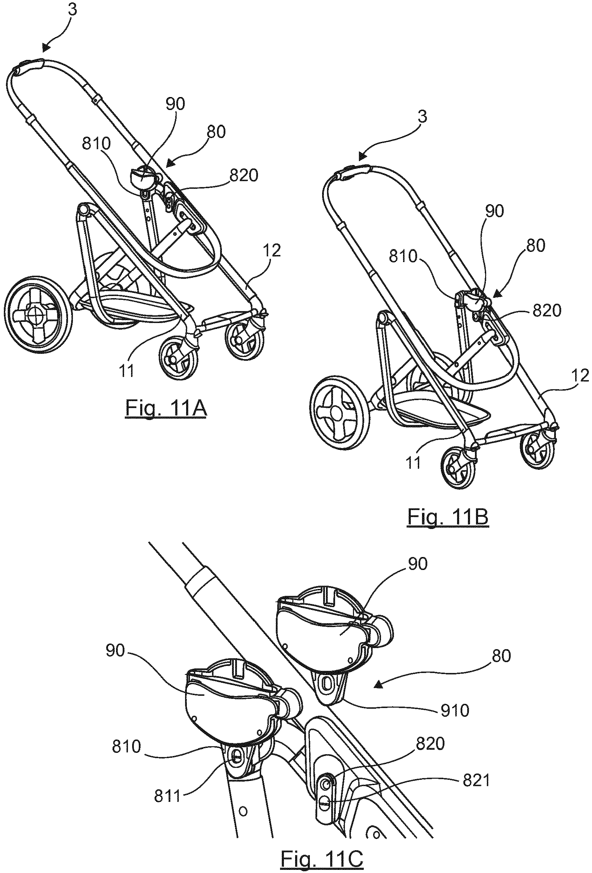

- les **figures 11A à 12C** illustrent une variante de réalisation des moyens de fixation arrière du second siège ;

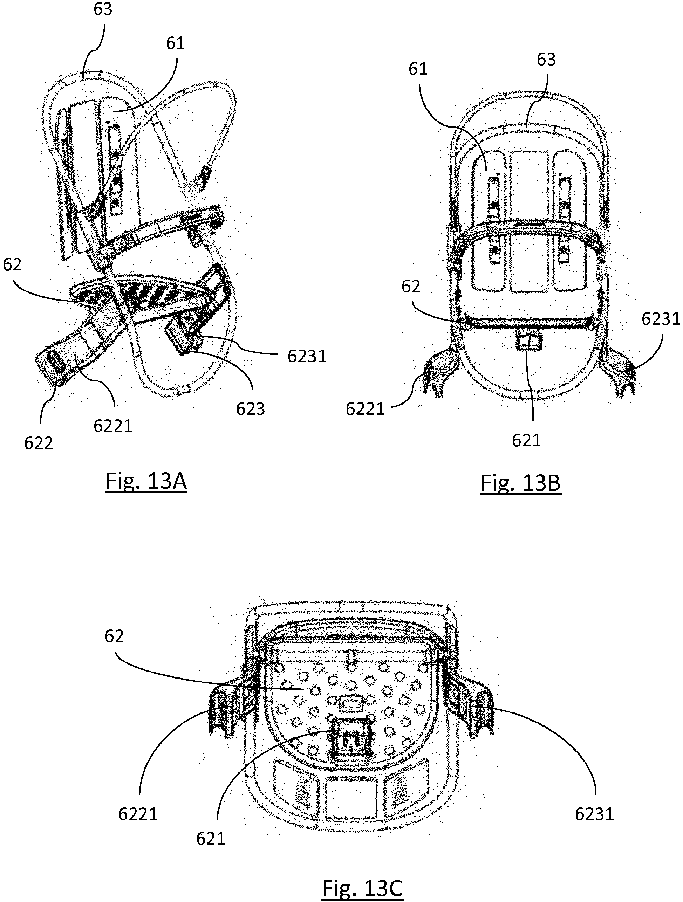

- les **figures 13A à 13C** sont des vues de trois-quarts, de face et de dessous du siège d'appoint, et en particulier des pieds munis des moyens de solidarisation aux montants avant de la poussette :

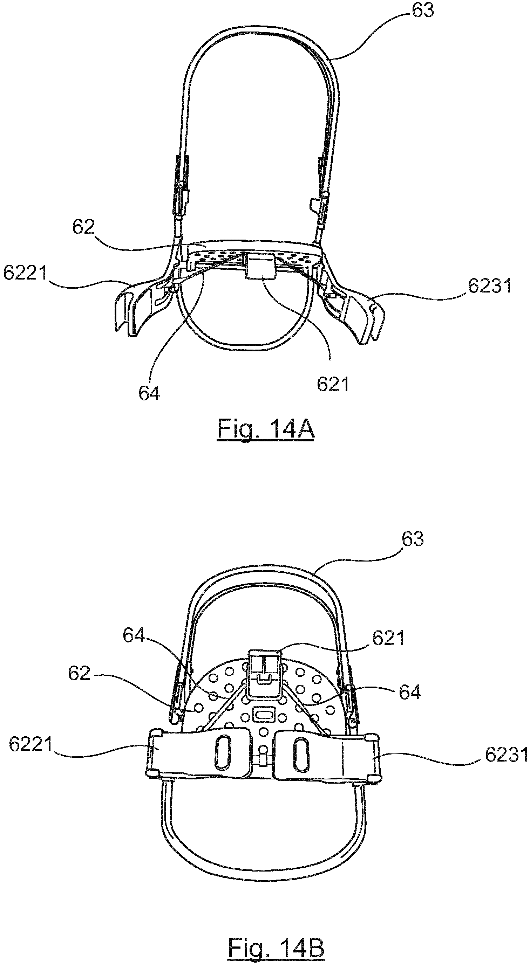

- les **figures 14A et 14B** illustrent le siège vu de face, les pieds étant déployés dans une position de solidarisation à la poussette, respectivement repliés dans une position de stockage du siège ;

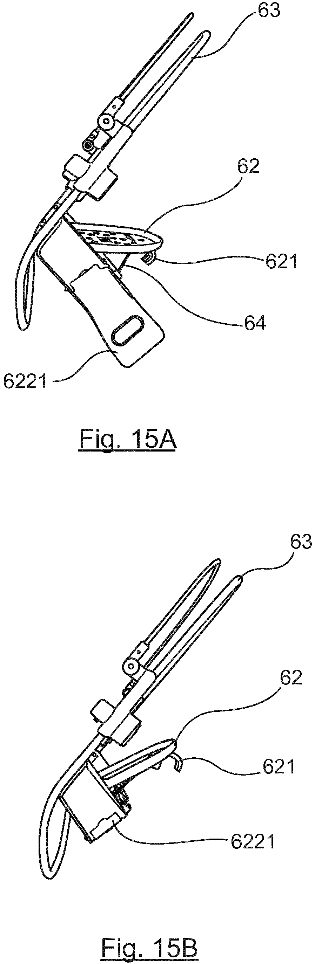

- les **figures 15A et 15B** illustrent le siège vu de côté, les pieds étant déployés dans une position de solidarisation à la poussette, respectivement repliés dans une position de stockage du siège ;

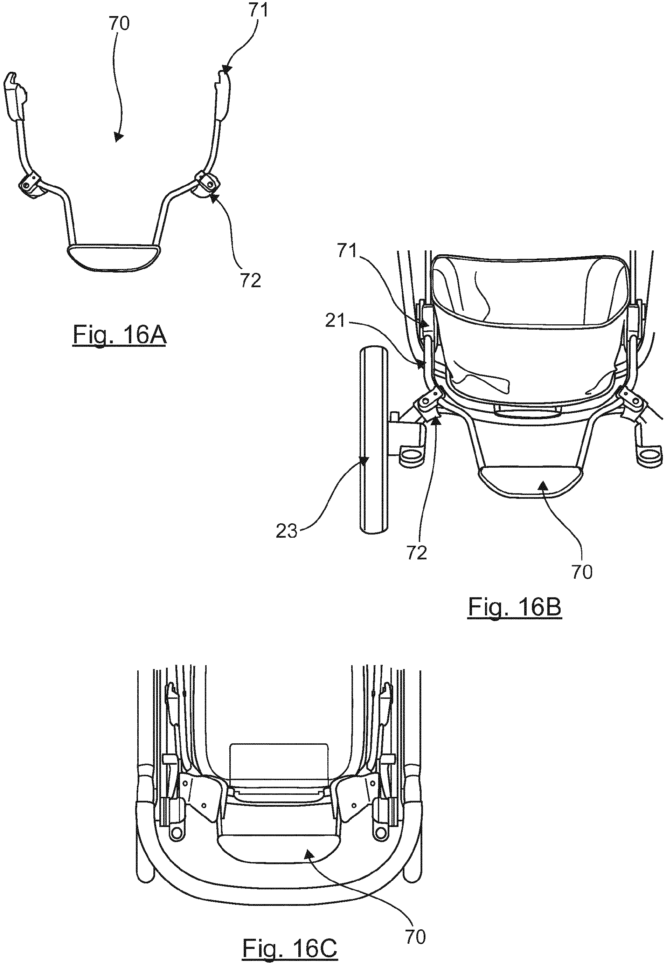

- les **figures 16A à 16C** illustrent une pédale d'aide à la montée de trottoir, vue seule et mise en place sur la poussette ;

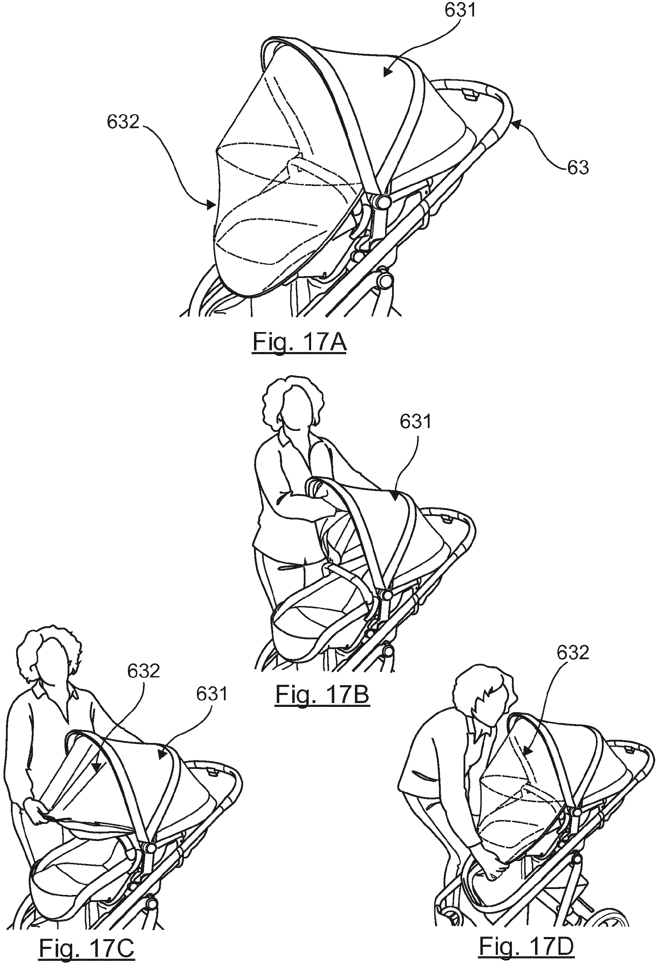

- les **figures 17A à 17D** illustrent le siège muni d'un canopy comportant une confection translucide destinée à recouvrir le siège.

### 5. Description détaillée

### 5.1 Principe général

Le principe général de l'invention repose sur une nouvelle approche de l'installation d'un siège d'appoint sur une poussette pour enfant, selon laquelle le châssis comporte, en plus d'une éventuelle traverse s'étendant classiquement au voisinage des roues avant (appelée ici « seconde traverse »), présente notamment dans le premier mode de réalisation décrit ci-après, au moins une autre traverse (appelée ici « première traverse ») sur laquelle vient se fixer au moins une partie des moyens de solidarisation du siège. Une autre partie des moyens de solidarisation du siège d'appoint peut se fixer sur une partie inférieure du châssis, c'est-à-dire située en aval de la première traverse.

Cette première traverse s'étend entre les roues avant et les moyens de solidarisation du support principal (qui peuvent être des moyens de solidarisation amovibles). Ceci permet que le siège d'appoint soit placé relativement bas, et à l'avant de la poussette, l'assise de ce siège d'appoint s'étendant au-dessus et au-delà (vers l'avant) de l'axe des roues avant.

Ainsi, selon l'invention la poussette pour enfant comporte un châssis présentant deux montants latéraux avant et deux montants latéraux arrière, portant chacun une roue, ou un bloc de roues. Des poignées, ou un guidon, sont montés à l'extrémité de poussoirs. Ces poussoirs sont montés mobiles en coulissement, par rapport aux montants avant. La poussette porte également un siège principal (ou une nacelle ou une coque) à l'avant duquel un siège d'appoint peut être monté de façon à transporter un second enfant.

Le siège d'appoint peut se solidariser directement au châssis de la poussette sans qu'il soit nécessaire de rajouter des éléments intermédiaires de connexion entre le châssis et le siège ni qu'aucun moyen spécifique ne soit prévu dès l'origine sur le châssis.

Pour cela, le siège d'appoint comprend des moyens de solidarisation dont les formes spécifiques permettent, à elles seules, la solidarisation au châssis de la poussette, et plus spécifiquement à des éléments appartenant à une partie avant du châssis.

Notamment, les moyens de solidarisation peuvent comprendre des moyens de solidarisation supérieurs au voisinage de la zone de jonction entre le dossier et l'assise du siège d'appoint, par exemple dans le prolongement de l'assise ou légèrement sous celle-ci. Des moyens de solidarisation inférieurs sont en outre prévus, au-dessous du niveau de l'assise, rejoignant le châssis à proximité des roues avant.

Ainsi, le châssis ne comprend pas d'éléments additionnels de solidarisation, par rapport à un châssis « classique » de poussette simple, qui seraient nécessaires pour coopérer avec les moyens de solidarisation du siège d'appoint. Lorsque le siège d'appoint est retiré de la poussette, la poussette peut être utilisée sans risques pour un enfant ou un adulte de se blesser à cause d'éléments qui feraient saillie. Et l'installation et le retrait du siège d'appoint peuvent être simples et efficaces.

L'installation permet de disposer de deux assises installées efficacement, le siège d'appoint étant décalé vers l'avant et au moins dans certains cas vers le bas, par rapport à l'assise principale. L'installation et le confort des deux enfants transportés sont assurés, ainsi que l'équilibre général de la poussette, qui garde un encombrement raisonnable.

### 5.2 Description d'un premier mode de réalisation particulier de l'invention

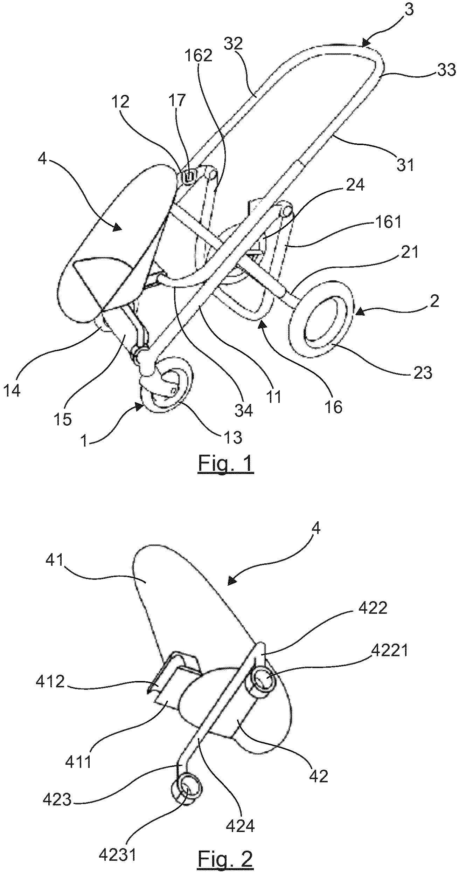

Les **figures 1 à 3** se rapportent à un premier mode de réalisation de l'invention, selon lequel le siège d'appoint de l'invention est monté, via trois points de contact, sur deux traverses sensiblement parallèles du châssis de la poussette.

Un premier point de contact est créé entre le siège et une première traverse s'étendant entre les bras poussoirs de la poussette. Deux autres points de contact sont créés entre le siège et une seconde traverse, située sous la première traverse, et s'étendant de manière classique au voisinage des roues avant.

La **figure 1** représente une poussette constituée d'un châssis comprenant trois sous-ensembles distincts 1, 2, 3.

Un premier sous-ensemble « avant » 1 comprend deux montants avant 11, 12 portant deux roues avant 13, 14 et reliés entre eux par une traverse 15 (dite « seconde traverse ») située au voisinage des roues 13, 14, cette seconde traverse pouvant former un repose-pieds dans ce mode de réalisation (l'invention peut également s'appliquer à des poussettes comprenant une traverse 15 placée sensiblement plus en hauteur par rapport aux roues, c'est-à-dire plus éloignée du sol, entre les montants avant 11, 12).

Ce premier sous-ensemble 1 comprend également un élément 16 en forme générale de « U » composé de deux montants 161, 162 articulés d'une part, en leur partie supérieure, par rapport à la partie supérieure des montants avant 11, 12 et d'autre part, plus bas, aux montants arrière 21, 22 d'un deuxième sous-ensemble « arrière » 2.

Ce deuxième sous-ensemble « arrière » 2 comporte donc deux montants arrière 21, 22 portés par deux roues arrière 23, 24 et articulés chacun en deux points, d'une part en partie inférieure par rapport aux montants 161, 162 du premier sous ensemble « avant » 1 et d'autre part en partie supérieure par rapport à un troisième sous-ensemble « poignée » 3.

Le troisième sous-ensemble « poignée » 3 est formé d'un cadre annulaire comportant une barre de préhension 33 permettant de déplacer et guider la poussette et reliée à deux montants latéraux (ou bras poussoirs) 31, 32 et une traverse inférieure 34, appelée « première traverse » dans ce document, en partie basse.

Ce troisième sous-ensemble « poignée » 3 peut être constitué de deux portions pouvant coulisser l'une par rapport à l'autre et/ou être monté coulissant par rapport au premier sous-ensemble « avant » 1, de façon à régler la poignée à une hauteur adaptée à son utilisateur et/ou à permettre le pliage de la poussette.

Dans ce premier mode de réalisation, les deux éléments du châssis de la poussette, « utiles » pour la fixation du siège, sont d'une part la première traverse 34 reliant les parties inférieures des poussoirs et d'autre part la seconde traverse 15, « classique », s'étendant au voisinage des roues avant et reliant les deux montants avant 11, 12.

La première traverse 34 peut notamment être de forme arrondie ou incurvée, au moins sur ses bords droit et gauche, et formée directement dans le prolongement des parties inférieures des poussoirs. Elle est prévue en retrait et au-dessus de la seconde traverse 15.

Un siège principal, ou une nacelle ou une coque (non représentés pour ce mode de réalisation, mais par exemple similaires à ceux illustrés sur les figures 8 à 10), destiné au transport d'un premier enfant, est installé sur le châssis de la poussette, plus précisément sur le premier sous-ensemble « avant » 1, par l'intermédiaire d'éléments de connexion 17 prévus à cet effet. Ainsi, dans le mode de réalisation illustré le premier siège, ou siège principal, est monté amovible et de manière à peu près centrée par rapport au châssis.

Dans ce premier mode de réalisation, le siège principal pourra également être monté amovible sur le châssis par l'intermédiaire d'une paire d'adaptateurs comportant des zones de connexion avec le siège déportées vers l'arrière de la poussette, par exemple selon l'approche illustrée sur les **figures 7 à 10** (décrites plus loin en lien avec le second mode de réalisation de l'invention).

Selon l'invention, un second siège 4, ou siège d'appoint, peut être installé de manière (également) amovible sur le châssis afin de recevoir un second enfant. Il est monté à l'avant et à un niveau inférieur à celui du siège principal. Ainsi, le siège principal et le siège d'appoint 4 sont décalés en hauteur par rapport au châssis, ce qui permet de ne pas entraver la visibilité de chacun des enfants et de répartir le poids sur le châssis de la poussette.

Comme représenté sur la **figure 2****,** ce siège d'appoint 4 est classiquement constitué d'un dossier 41 et d'une assise 42. Il présente des moyens de solidarisation avec le châssis de la poussette, et plus spécifiquement au moins deux unités de solidarisation avec la première traverse 34 et la seconde traverse 15.

Dans l'exemple illustré, le dossier 41 et l'assise 42 portent chacun une unité de solidarisation avec respectivement la première traverse 34 et la deuxième traverse 15.

Comme illustré par les **figures 1 et 2****,** les éléments de solidarisation comprennent deux anneaux 4221 et 4231, montés respectivement à l'extrémité de deux jambes sensiblement verticales 422, 423, s'étendant elles-mêmes dans le prolongement d'une barre horizontale 424, fixée sous l'assise 42 du siège d'appoint 4. La tige 424 et les deux jambes 422, 423 peuvent être formées dans la même pièce pliée de façon adéquate.

Les anneaux 4221 et 4231 comprennent deux portions, une première portion fixée à la jambe correspondante et une portion mobile, que l'on peut éloigner de la portion fixe pour permettre la mise en place de l'anneau et que l'on verrouille ensuite sur cette portion fixe de l'anneau, pour le fermer et assurer un maintien efficace sur la seconde traverse 15, comme illustré sur la **figure 1****.**

La base du dossier 41 porte, quant à elle, une mâchoire d'accrochage présentant deux demi-mâchoires 411, 412, aptes à venir chevaucher la première traverse 34. Au moins l'une de ces deux demi-mâchoires 411, 412, est déformable par exemple la demi-mâchoire supérieure 412, pour permettre une solidarisation et une désolidarisation par clippage.

Dans un autre mode de réalisation, la mâchoire d'accrochage pourrait être fixée à l'assise, par exemple sous l'assise.

Ainsi, l'assemblage du siège d'appoint sur le châssis se fait tout d'abord par la mise en place des anneaux 4221 et 4231, le siège d'appoint étant basculé vers l'avant. Une fois ces anneaux verrouillés, on pivote le siège d'appoint 4 autour de la seconde traverse 15, de façon que les demi-mâchoires 411, 412, viennent prendre place autour de la première traverse 34.

Le démontage du siège d'appoint se fait de façon symétrique, en tirant sur le haut du dossier 41 par exemple, pour déclipper les demi-mâchoires 411, 412, et faire basculer le siège vers l'avant. On déverrouille alors les anneaux 4221, 4231, pour les séparer de la seconde traverse 15.

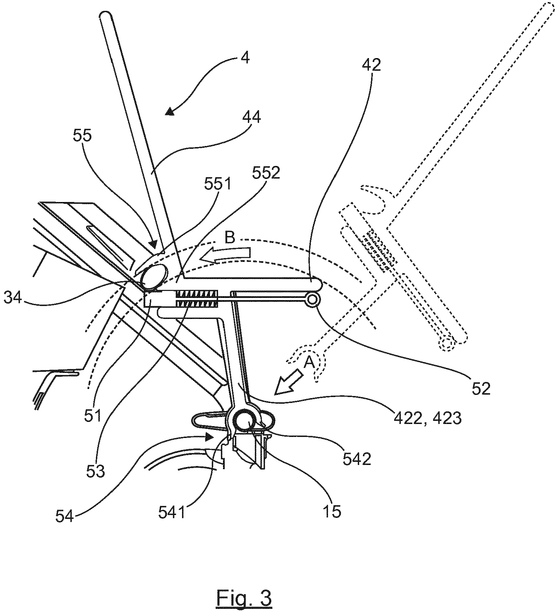

Selon une variante, illustrée par la **figure 3****,** les jambes 422, 423, s'étendant sous l'assise portent chacune un collier ouvert 54, sensiblement en forme de « fer à cheval », et dont chaque branche 541, 542 est suffisamment souple pour s'écarter lorsque l'utilisateur les place au dessus de la traverse 15 puis appuie sur le siège (flèche A), puis pour maintenir ensuite le collier 54 efficacement enserré autour de la seconde traverse 15.

La base du dossier 41 porte, quant à elle, une mâchoire 55, apte à enserrer la première traverse 34. Cette mâchoire 55 comprend une demi-mâchoire 551 supérieure fixe, le cas échéant, légèrement souple, épousant la partie supérieure de la première traverse 34. La demi mâchoire inférieure 552 est, quant à elle mobile, et/ou coopère avec un élément mobile 51, permettant d'assurer un verrouillage du siège d'appoint sur le châssis, et de permettre le déverrouillage, pour le retrait de ce siège d'appoint.

Dans le mode de réalisation illustré, l'élément 51 est mobile en coulissement dans un plan sensiblement horizontal, sous l'assise 42. Dans une position de verrouillage, qui est la position par défaut, en l'absence d'autres sollicitations, contrôlées par un ressort 53, l'élément 51 est repoussé vers l'arrière de la poussette, et « ferme » la mâchoire 55 autour de la première traverse 34, que le siège d'appoint 4 soit efficacement maintenu sur le châssis.

Le déverrouillage, permettant le retrait du siège peut être assuré par une gâchette 52, placée sous l'assise 42, et qui permet de déplacer l'élément 51 vers l'avant de la poussette, en comprimant le ressort 53. Il est alors possible de séparer la mâchoire 55 de la première traverse 34.

Ainsi, l'installation du siège d'appoint 4 est particulièrement simple : l'utilisateur place les colliers 54 sur la seconde traverse 15 (flèche A), puis bascule en rotation le siège d'appoint 4, autour de cette seconde traverse (flèche B) jusqu'à ce que la mâchoire 55 vienne en contact avec la première traverse 34. La forme de la mâchoire et/ou de la pièce 51 est adaptée pour qu'une simple pression sur le dossier entraîne le recul de la pièce 51, la mise en place de la mâchoire 55, puis le retour de la pièce 51.

Le retrait du siège d'appoint 4 est également aisé : il suffit de tirer sur la gâchette 52, puis de basculer le siège d'appoint vers l'avant, et enfin de déclipper les colliers 55.

### 5.3 Description d'un deuxième mode de réalisation particulier de l'invention

Les **figures 4 à 12C** se rapportent à un second mode de réalisation de l'invention, selon lequel le siège d'appoint de l'invention est monté, via trois points de contact, sur deux montants avant et une traverse du châssis de la poussette.

Deux points de contact sont créés entre le siège et deux montants avant latéraux, et un troisième point de contact est créé entre le siège et la première traverse (par exemple similaire à celle décrite pour le premier mode de réalisation).

La poussette sur laquelle s'installe le siège d'appoint 6 selon ce deuxième mode de réalisation est similaire à la poussette du premier mode de réalisation.

Comme décrit précédemment, un siège principal 9, ou une nacelle ou une coque, destiné au transport d'un premier enfant, peut être installé sur le châssis de la poussette, plus précisément sur le premier ensemble « avant » 1, par l'intermédiaire d'éléments de connexion prévus à cet effet. Ces éléments de connexion pourront être situés sensiblement au centre du châssis (comme dans le premier mode de réalisation) ou bien déportés vers l'arrière, comme décrit plus loin en relation avec les **figures 7 à 10****.**

Dans ce mode de réalisation, le siège d'appoint 6 est installé directement sur les montants avant 11, 12 de la poussette, c'est-à-dire les montants appartenant à l'ensemble « avant » 1. La traverse frontale 15 (« classique ») s'étendant entre les roues avant n'est plus utilisée pour la fixation du siège.

Comme représenté sur la **figure 4****,** le siège d'appoint 6 est classiquement constitué d'un dossier 61 et d'une assise 62 qui présente des moyens de solidarisation au châssis de la poussette. Il comporte également un cadre 63 qui constitue un support pour l'assise, le dossier, les éléments de connexion du siège à la poussette, ainsi que d'autres accessoires comme un canopy par exemple.

L'assise 62 comporte une première unité de solidarisation constituée d'une mâchoire d'accrochage 621 présentant deux demi-mâchoires (sensiblement similaires à celles décrites dans le premier mode de réalisation), aptes à venir chevaucher la première traverse 34. Ici aussi, au moins l'une de ces deux demi-mâchoires est déformable pour permettre une solidarisation et une désolidarisation par clippage.

Elle comporte également une deuxième unité de solidarisation formée de deux autres mâchoires d'accrochage 622, 623, représentées plus en détails sur les **figures 6A et 6B****.** Ces mâchoires 622, 623 sont localisées à l'extrémité inférieure des montants latéraux du siège sur les figures (emplacement traditionnel pour les éléments de connexion), mais peuvent plus généralement être localisées sous l'assise 62.

On notera que les axes principaux (c'est-à-dire longitudinaux) des mâchoires 622, 623 et de la mâchoire 621 sont perpendiculaires entre eux.

Comme illustré sur les **figures 6A et 6B****,** chacune des mâchoires comprend deux demi mâchoires 6231, 6232 configurées pour venir s'encastrer autour d'un des montants avant 11, 12.

Un élément interne 7, monté mobile en translation à l'intérieur de la mâchoire, permet le verrouillage de la mâchoire sur le montant. Il comporte deux portions en saillie : une première portion 71 communique avec l'extérieur du montant de façon à être accessible à l'utilisateur, tandis qu'une seconde portion 72 située entre les deux demi-mâchoires est configurée pour entrer en contact avec le montant.

Les mâchoires sont prévues pour se verrouiller automatiquement autour des montants 11, 12 (**figure 6A**). Afin de les déverrouiller, il suffit d'actionner la portion en saillie 71 (flèche C sur la **figure 6B****)** formant bouton de déverrouillage. La translation de la portion 71 entraîne le recul de la portion 72 et la libération du montant correspondant.

Selon un mode de réalisation spécifique, illustré par les **figures 13A à 15B****,** les montants latéraux du siège qui sont munis des mâchoires d'accrochage 622, 623, sont constitués de deux portions articulées l'une par rapport à l'autre.

En particulier, la portion inférieure - ou pied - 6221, 6231 de chaque montant latéral est mobile en rotation par rapport à la portion supérieure du montant. Cette structure permet que les pieds 6221, 6231 soient rabattus vers l'intérieur du siège lorsque celui-ci n'est pas utilisé et qu'il est retiré de la poussette pour être rangé.

Les **figures 14A et 14B** illustrent respectivement le siège vu de face dans une première position dans laquelle les pieds 6221, 6231 sont déployés (c'est-à-dire en position d'utilisation ou de solidarisation à la poussette) et dans une seconde position dans laquelle les pieds 6221, 6231 sont repliés vers l'intérieur du siège (c'est-à-dire en position repliée, ou de stockage).

Les **figures 15A et 15B** illustrent ces deux positions respectives, le siège étant vu de côté.

Lors du passage de la position d'utilisation à la position de stockage, l'assise 62 du siège change de position : elle est rabattue - en même temps que les pieds - vers le cadre 63.

Plus précisément, les pieds 6221, 6231 sont rabattus par l'utilisateur en dessous de l'assise 62 et entrainent donc naturellement cette dernière dans leur mouvement.

L'assise 62 est donc, dans la position de stockage, sensiblement parallèle au cadre 63 du siège, ce qui rend l'ensemble compact et permet de stocker le siège sans occuper un volume important.

Lorsque le siège doit être utilisé, il peut être prévu que l'assise 62 se déploie en même temps que les pieds 6221, 6231 sont dépliés.

Pour cela, les pieds comprennent par exemple des moyens de contrôle du mouvement de l'assise, comprenant notamment une ou plusieurs sangles 64, visibles sur les **figures 14A et 14B****.**

La sangle 64 peut d'une part être fixée par chacune de ses extrémités sur la face intérieure de chaque pied 6221, 6231, et d'autre part être fixée dans sa partie intermédiaire à l'assise 62, par exemple au niveau de la mâchoire centrale 621.

Alternativement, deux sangles peuvent être utilisées à la place d'une sangle unique, reliées chacune par exemple d'une part à la face interne d'un pied, et d'autre part à la mâchoire centrale.

Des points de fixation sur les pieds et sur l'assise autres que ceux représentés peuvent aussi être choisis.

Ainsi, lorsque l'utilisateur déplie les pieds 6221, 6231, la ou les sangles 64 exercent une traction sur l'assise 62, l'entrainant en rotation de façon à l'éloigner du cadre 63 et lui faire prendre une position d'utilisation (c'est-à-dire sensiblement perpendiculaire au dossier 61).

Ce mécanisme simple et efficace permet de faire gagner du temps à l'utilisateur qui n'a à déployer que les pieds.

En variante, des moyens mettant en oeuvre des biellettes ou tout autre assurant les déplacements des différents éléments les uns par rapport aux autres peuvent être envisagés.

L'assemblage du siège d'appoint 6 sur le châssis se déroule par exemple comme suit : la mâchoire centrale 621 est d'abord clippée sur la traverse 34, puis les deux mâchoires latérales 622, 623 sont à leur tour clippées autour des montants avant, via une légère rotation du siège. Les éléments du siège à l'extrémité desquels sont montées les mâchoires 622, 623 peuvent être légèrement déformables de façon à accepter un minimum de rotation.

La mise en place d'un siège d'appoint selon l'invention est compatible avec la présence d'un siège principal, notamment convertible d'une position « assise » à une position « allongée ».

Le cas échéant, la châssis de la poussette peut comporter une paire d'adaptateurs arrière 8 destinés à recevoir un support d'enfant principal 9, comme illustré sur les figures 7 à 10, pour décaler légèrement vers l'arrière le support d'enfant principal, par rapport à une utilisation sans siège d'appoint.

Cette paire d'adaptateurs 8 comprend, dans le mode de réalisation illustré, deux adaptateurs indépendants qui sont fixés sur les montants 161, 162 articulés par rapport aux montants avant 11, 12, de façon à ce que le siège arrière 9 soit placé légèrement en amont du siège d'appoint 6 fixé à l'avant de la poussette.

La paire d'adaptateurs 8 permet ainsi de déporter la position du siège principal 9 vers l'arrière de la poussette, de façon à permettre le montage aisé des deux sièges 6, 9 et à répartir la charge de façon équilibrée.

Comme visible sur la **figure 7****,** ces adaptateurs comportent deux emplacements 81, 82 de connexion avec les éléments de connexion du siège 9, pourvus de détrompeurs.

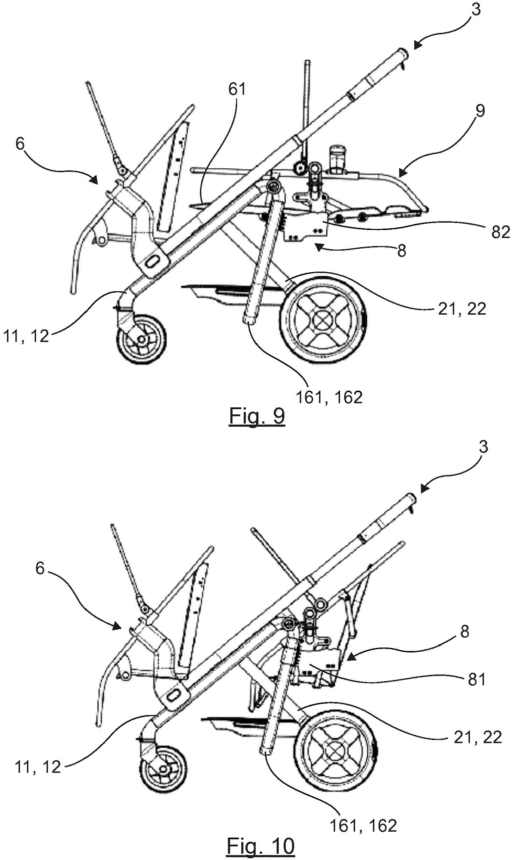

Ces emplacements distincts 81, 82 offrent la possibilité de positionner le support principal 9 selon que le siège d'appoint est présent ou non, selon le type de support utilisé et/ou selon plusieurs configurations, à savoir respectivement dos à la mère (**figure 10**) et face à la mère (**figures 8** **et** **9**), cette dernière position demandant plus d'espace entre les deux sièges 6, 9 du fait de la longueur du dossier 61, notamment lorsque celui-ci est basculé lorsque le siège est en position allongée.

Les adaptateurs sont montés par exemple par vissage et/ou clippage.

Ils peuvent être adaptés pour adopter deux positions : d'une part une position d'utilisation ou de portage, dans laquelle ils sont déployés vers l'arrière (comme illustré sur la **figure 7**) et reçoivent le siège ; d'autre part une position de rangement dans laquelle ils sont repliés vers l'intérieur du châssis et ne présentent ainsi pas de portion en saillie susceptible de blesser l'enfant ou l'utilisateur.

Dans ce cas, ils comportent par exemple une charnière, proche des montants, faisant office de ligne de pliage et à partir de laquelle il est possible de leur faire effectuer un demi-tour. En complément ou en variante, ils peuvent être amovibles, de façon à pouvoir être enlevés du châssis s'ils ne sont plus nécessaires.

Les **figures 11A à 12C** illustrent une variante de réalisation des adaptateurs arrière.

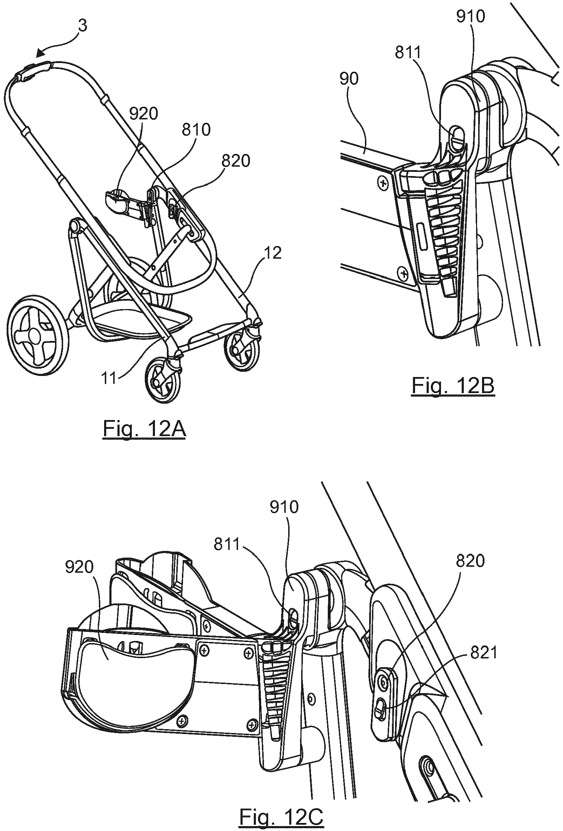

Le système d'adaptateurs arrière 80 comprend deux paires de coulisseaux mâles 810, 820, fixés en partie supérieure des montants 11, 12 de la poussette, comme représenté sur les **figures 11C** **et** **12C****.**

Un seul coulisseau de chacune des paires est visible sur les figures, l'autre coulisseau étant situé de manière symétrique sur le montant avant, à l'opposé du premier coulisseau.

Chaque coulisseau 810, 820 est adapté pour coopérer avec une glissière femelle 910, formée sur l'élément de connexion, ici de type Moduloclip®, 90 à un support d'enfant correspondant (non représenté).

Une inversion des parties mâle et femelle est également possible, c'est-à-dire qu'un coulisseau peut être formé sur l'élément Moduloclip® de façon à coopérer avec une glissière formée dans les montants avant de la poussette. Plus généralement, d'autres modes de fixation, ainsi que d'autres types de connecteurs, peuvent être mis en oeuvre.

Chacun des coulisseaux 810, 820 comporte un bouton 811, 821 qui permet le verrouillage en position de l'élément de connexion 90. Ce bouton 811, 821 est ramené et maintenu en position de verrouillage par un ressort (non visible).

Comme visible sur la **figure 11C****,** les éléments de connexion 90 peuvent être connectés à l'une ou l'autre des paires de coulisseaux 810, 820 en fonction notamment de la présence du siège d'appoint, du type de support d'enfant qui est installé, de son orientation (face route, face mère) et/ou de son inclinaison (« allongé », inclinaison « intermédiaire », « assis »).

Les coulisseaux « avant » 820, disposés sensiblement au centre de la poussette, peuvent ainsi être adaptés à la réception d'un siège unique (c'est-à-dire que la poussette ne reçoit pas de second siège d'appoint), quelles que soient son orientation et son inclinaison.

Les coulisseaux « arrière » 810, disposés en arrière des coulisseaux 820, peuvent être adaptés à la réception d'un siège d'appoint pour utilisation avec un second siège d'appoint, disposé à l'avant de la poussette, conformément à l'invention décrite dans le présent document.

Le siège d'appoint peut être disposé face route (selon une inclinaison de type « allongé » ou « intermédiaire ») ou face mère (selon une inclinaison de type « assis »).

Les **figures 12A à 12C** représentent un exemple de mise en oeuvre d'éléments de connexion, ici de type Moduloclip®, 90 pour les coulisseaux arrière 810.

Ces éléments de connexion 90 comprennent, comme précédemment, une glissière 910 destinée à coopérer avec les coulisseaux 810 et verrouillée en position par le système de bouton 811 et ressort, mais la zone de connexion 920 est déportée encore plus vers l'arrière de la poussette.

Dans cette configuration, le siège d'appoint connecté aux zones de connexion 920 peut être disposé face mère (selon une inclinaison de type « allongé », « intermédiaire » ou « assis ») ou face route.

Une nacelle peut également être utilisée à la place du siège.

Selon cette variante, les éléments de connexion 90 une fois mis en place sur les coulisseaux 810 peuvent être escamotés, comme illustré sur la **figure 12C****.**

Ceci permet notamment d'éviter l'interférence avec les pédales de blocage/déblocage des roues arrière lorsque le châssis de la poussette est plié.

Le système d'adaptateurs 8 tel que décrit en lien avec les figures 7 à 10, et le système d'adaptateurs 80 tel que décrit en lien avec les figures 11A à 11C sont compatibles avec le premier mode de réalisation de l'invention, décrit au paragraphe 5.2.

L'invention est compatible avec le pliage de la poussette en vue de son rangement. Il suffit pour cela de retirer le siège d'appoint 4, 6 et/ou le siège principal 9.

Selon un mode de réalisation particulier, un moyen d'aide au basculement de la poussette sur ses roues arrière peut être prévu, de façon à aider l'utilisateur à soulever l'avant de la poussette lors du franchissement des trottoirs, en particulier lorsque deux enfants y sont installés, le poids de la poussette étant alors relativement important. Il peut notamment être prévu une pédale 70.

Selon le mode de réalisation illustré, la pédale 70 est un accessoire amovible en forme générale de « U » à base réduite, qui se solidarise par clippage à l'arrière du châssis de la poussette, sur des montants arrière 21, 22 et une portion reliant leurs extrémités et portant les roues arrière.

Elle comprend pour cela deux paires d'éléments de clippage 71, 72 visibles sur la **figure 16A****,** venant se clipper à différentes positions des montants arrière, comme illustré sur la **figure 16B****.**

Plus précisément, la première paire d'éléments de clippage 71, positionnée à l'extrémité des branches du « U », se fixe sensiblement au milieu des montants arrière 21, 22, tandis que la seconde paire d'éléments de clippage 72 positionnée dans des angles se fixe à hauteur des roues arrière 23, 24, et notamment sur des éléments de support de roue, reliant les roues aux montants arrière.

Cette pédale permet, lorsqu'elle est installée, de disposer d'un bras de levier, sur lequel l'utilisateur peut agir lorsqu'il doit soulever la poussette, par exemple pour monter sur un trottoir.

La pédale 70 peut être gardée en place lorsque la poussette est repliée, comme illustré sur la **figure 16C****.**

Le système de clippage permet de retirer (et installer) la pédale 70 en toute simplicité et très rapidement.

Dans les différents modes de réalisation décrits, le siège d'appoint 4, 6 et/ou le siège principal peut par ailleurs être équipé d'un canopy 631 monté sur le cadre 63 du siège, comme illustré sur les **figures 17A à 17D****.**

Ces **figures 17A à 17D** illustrent un mode de réalisation particulier, un accessoire, ou filet, de protection (appelé en anglais « nap keeper »), peut être associé au canopy 631, comprenant une toile 632, ou confection, translucide et formée de préférence d'un filet légèrement élastique.

Une première des extrémités de cette toile est solidaire du canopy 631, la toile 632 pouvant ainsi être par exemple stockée dans un logement prévu à cet effet dans la partie supérieure du canopy, comme illustré sur la **figure 17B****.** Cette configuration permet également de ne pas égarer la toile lorsqu'elle n'est pas utilisée.

Une seconde extrémité, comportant un arceau flexible, est destinée à être insérée sous la partie avant du châssis de la poussette dans une position d'utilisation de la toile 632. Dans cette position d'utilisation, illustrée sur **les** **figures 17A et 17D****,** la toile 632 recouvre le siège et l'enfant qui y est installé, de façon à l'isoler de l'environnement extérieur, notamment lorsqu'il fait la sieste.

La **figure 17C** illustre la toile 632 en cours de mise en place, entre sa position de stockage et sa position d'utilisation.

## Revendications

1. Poussette pour enfant comprenant un châssis comportant deux montants avant (11, 12), portant chacun une roue avant (13, 14) ou un bloc de roues avant, deux montants arrière (21, 22), portant chacun une roue arrière (23, 24) ou un bloc de roues arrière, et deux poussoirs (31, 32) portant en leur partie supérieure des poignées et/ou un guidon, ledit châssis pouvant recevoir un support d'enfant principal,
**caractérisée en ce que** ledit châssis présente une première traverse (34) s'étendant entre lesdits poussoirs (31, 32), au voisinage des parties inférieures desdits poussoirs (31, 32),
et **en ce que** ladite poussette comprend un siège d'appoint (4, 6) amovible, présentant une assise (42, 62) et un dossier (41, 61) et équipé de premiers moyens de solidarisation s'étendant à proximité d'une zone reliant ladite assise et ledit dossier et coopérant avec ladite première traverse (34).

2. Poussette pour enfant selon la revendication 1, **caractérisée en ce que** ledit siège d'appoint (4, 6) amovible comprend des seconds moyens de solidarisation avec une portion inférieure dudit châssis, placée plus bas que ladite première traverse (34).

3. Poussette pour enfant selon la revendication 2, **caractérisée en ce que** lesdits seconds moyens de solidarisation définissent deux points d'appui dudit siège d'appoint (4, 6) sur ledit châssis.

4. Poussette pour enfant selon l'une quelconque des revendications 2 et 3, **caractérisée en ce que** ledit châssis présente une seconde traverse (15) reliant lesdits montants avant (11, 12) au voisinage desdites roues avant (13, 14), et **en ce que** lesdits seconds moyens de solidarisation coopèrent avec ladite seconde traverse (15).

5. Poussette pour enfant selon l'une quelconque des revendications 2 à 4, **caractérisée en ce que** lesdits premiers et/ou seconds moyens de solidarisation comprennent au moins un élément de solidarisation venant chevaucher au moins une desdites première et/ou seconde traverses (34, 15).

6. Poussette pour enfant selon l'une quelconque des revendications 2 à 5, **caractérisée en ce que** lesdits seconds moyens de solidarisation comprennent au moins un élément de solidarisation (4221, 4231) monté dans le prolongement d'au moins une jambe (422, 423) sensiblement verticale s'étendant depuis l'assise (42) dudit siège d'appoint (4, 6).

7. Poussette pour enfant selon la revendication 3, **caractérisée en ce que** lesdits points d'appui sont placés sur chacun desdits montants avant (11, 12), lesdits seconds moyens de solidarisation comprenant une paire d'éléments de solidarisation (622, 623) venant chevaucher lesdits montants avant (11, 12) dudit châssis.

8. Poussette pour enfant selon l'une quelconque des revendications 1 à 7, **caractérisée en ce que** lesdits premiers moyens de solidarisation présentent au moins une mâchoire apte à enserrer ladite première traverse (34).

9. Poussette pour enfant selon la revendication 4, **caractérisée en ce qu'**elle comprend des moyens de verrouillage des premiers moyens de solidarisation avec ladite première traverse (34) et/ou des seconds moyens de solidarisation avec ladite seconde traverse (15).

10. Poussette pour enfant selon la revendication 1, **caractérisée en ce que** lesdits premiers moyens de solidarisation sont mobiles entre une position repliée et une position déployée.

11. Poussette pour enfant selon les revendications 2 et 10, **caractérisée en ce que** ledit siège d'appoint (6) comprend deux montants latéraux comprenant chacun une première portion solidarisée au siège (6) et une seconde portion (6221, 6231) munie d'un desdits seconds moyens de solidarisation, ladite seconde portion (6221, 6231) étant articulée par rapport à ladite première portion.

12. Poussette pour enfant selon la revendication 11, **caractérisée en ce que** lesdites secondes portions (6221, 6231) comprennent des moyens de contrôle de l'assise (62) dudit siège (6).

13. Poussette pour enfant selon la revendication 12, **caractérisée en ce que** lesdits moyens de contrôle de l'assise comprennent au moins une sangle reliée d'une part auxdites secondes portions (6221, 6231) et d'autre part à ladite assise (62).

14. Poussette pour enfant selon la revendication 1, **caractérisée en ce qu'**elle comprend une pédale d'aide au franchissement de trottoirs.

15. Siège d'appoint amovible pour poussette selon l'une quelconque des revendications 1 à 14, présentant une assise (42, 62) et un dossier (41, 61),
**caractérisé en ce qu'**il est équipé de premiers moyens de solidarisation s'étendant à proximité d'une zone reliant ladite assise et ledit dossier et destiné à coopérer avec une première traverse (34) du châssis de ladite poussette, s'étendant entre deux poussoirs (31, 32) dudit châssis, au voisinage des parties inférieures desdits poussoirs (31, 32).
